# EUROPEAN PATENT SPECIFICATION

(11) **EP 3 187 661 B1**
(45) Date of publication and mention of the grant of the patent: **04.08.2021**
(21) Application number: 16206390.3
(22) Date of filing: 22.12.2016
(51) Int. Cl.: E02D 27/38

(54) **SUBSURFACE TANK**
UNTERIRDISCHER TANK
RÉSERVOIR SOUTERRAIN

(30) Priority: 23.12.2015 NL 2016014
(43) Date of publication of application: 05.07.2017
(73) Proprietor: HoCoSto Holding B.V., 4885 JJ Achtmaal (NL)
(72) Inventor: GEERTS, Renatus Bernardinus Maria, 4885 JJ ACHTMAAL (NL)
(74) Representative: Algemeen Octrooi- en Merkenbureau B.V.

(56) References cited:
- WO-A1-2006/038602
- DE-A1- 19 929 692
- DE-A1-102004 012 720
- KR-B1- 100 824 215
- US-B1- 6 254 309

## Description

### Background of the Invention

The present invention relates in general to a subsurface tank, a method of installing such a tank and the use of such a tank, the tank being arranged for holding a liquid. The present invention relates more in particular to a subsurface storage tank for storing thermal seasonal energy.

Climate change, concerns for global warming and the rapid decrease of oil reserves and the increase in oil prices as a result thereof are just a few examples of incentives to invest in a transition towards higher adoption of renewable energy. A vast variety of renewable energy technologies can be distinguished. Well known examples are renewable energy gained from wind energy, water (hydro) energy and solar energy. Less known are other renewable energy sources like biomass energy, heat pumps, grid energy storage, and geothermal energy. Geothermal energy being thermal energy generated and stored in the earth.

An important aspect of renewable energy sources is the storage of the energy. In for example seasonal thermal energy storage tanks, energy in the form of heat or cold can be stored for periods of up to several months. The thermal energy can be collected whenever it is available and be used whenever needed, for example heat and cold can be stored in opposing seasons, e.g. heat stored during summer and used during winter, and cold stored during winter and used to cool during summer season.

Such thermal energy storage can be fed by a plurality of (renewable) energy sources such as earth heat from heat pumps, solar energy from solar collectors, or from waste heat from an air conditioning system. In these systems the energy is transported towards, and stored in a storage tank in liquid form, i.e. in water.

Such thermal energy collection can take place on a household level, for example with air conditioning systems and solar collectors, or on an industrial level, by collecting heat from industrial processes, for example.

The way the energy is used from the storage tanks in for example these seasonal thermal energy storages, can also vary, and examples thereof are heat exchangers, heat pumps, circular pumps, central heating systems, etc.

Another important aspect of renewable energy is the costs involved in investing in a renewable energy system or infrastructure and the costs per energy unit in US dollar or Euro per Joule. Due to the fact that most current energy devices, systems and infrastructure being highly depend on conventional non-renewable natural resources such as oil, gas and other fossil fuels, the costs for investing in non-renewable devices, systems and infrastructure are relative low. Moreover, the price of non-renewable natural resources in costs per energy units is sometimes also lower when compared to renewable energy. For adoption of, or transition towards renewable energy it should be competitive to non-renewable energy, hence, not only price per energy unit should be low, the investment costs should be low as well, such that the period for return on investment is short enough.
WO-A-2006/038602 relates to a three-dimensional rainwater storage structure.

Accordingly, there is a need for an improved renewable energy system. More in particular, a simplified system with a simplified construction, wherein at least some of the above mentioned drawbacks have been obviated, resulting in a low price per energy unit, low investment costs and thus a short return on investment.

A goal of the present invention is to provide an improved subsurface tank.

It is a further goals of the present invention to provide an improved subsurface tank for a renewable energy system, whit a simplified construction and construction method, for efficient energy storage at low costs short return on investment.

### Summary

In a first aspect of the invention, there is provided a method of installing a subsurface tank, comprising the steps of:
- building a framework having dimensions corresponding to a required volume of the tank;
- providing a foil having dimensions sufficient to cover the framework;
- covering at least the bottom and wall surfaces of the framework with said foil;
- placing the framework in a hole sufficient for the framework to be contained below ground surface.

The method is characterized in that the step of building the framework comprises building the framework from a lightweight rigid structure modular space frame.

Seasonal thermal energy storage is a form of storing cold or heat for long periods of time, up to several months. The thermal energy can be collected in several manners whenever available. The preferred medium for the tank is water. The water is heated during the summer period, and the hot water is stored within the tank and used during winter to warm a building. Vice versa, during the winter, the water can be cooled and stored in the tank to be used during the summer period to cool the building. The water of such a system is stored in a large tank which is placed below ground surface. From an input perspective, several systems can be coupled to the tank, or preferably to a heat exchanger provided in the tank, to heat or cool the water and hence, convert the thermal energy into the water stored in the tank. Examples thereof are solar collectors, heat pumps, geothermal pumps, industrial residual heat, or heat from air conditioning systems. From an output perspective, several systems can be coupled to the tank, or preferably to a heat exchanger provided in the thank, for use of the thermal energy. Examples thereof are heat exchangers, heat pumps, circular pumps, central heating systems, etc.

As indicated, in a further and preferred example of the invention, the tank is already provided with a heat exchanger. This has the advantage that in such a way, a closed system can be obtained and the risk for contamination of the water, e.g. legionella and such, or the risk for corrosion is reduced to a minimum. Once the tank is filled with water, the tank can be sealed and thermal energy in the form of heat/cold can be stored and obtained through the heat exchanger inside the tank.

However, in yet another example, the tank is arranged to resist corrosion, e.g. by adding an anti-corrosion substance, or by using only corrosion resistant materials for the space frame, and/or arranged to resist to contamination of the water, e.g. for example by adding a water filter, or other means to extract or kill bacteria such as heating element. If the tank is arranged to resist corrosion and/or resist or at least control contamination, then the tank could be used as an open system wherein (fresh) water can be introduced and water can be drawn from the tank for example for showering or consumption of the water.

For a tank to be suitable for a seasonal thermal energy storage system it requires a certain capacity. If for example water is used as the liquid for storing thermal energy, the volume of the tank needs to be plural cubic meter, i.e. up to 1000 cubic meter, to have sufficient water to store sufficient thermal energy for the application in which the tank is used, e.g. a capacity to keep a large building warm during winter and cold during summer.

A tank with sufficient water capacity for most applications and preferred use, is thus large in dimensions. If such a large tank is installed below ground surface, it needs to be sufficiently strong so as not to collapse under the lateral earth pressure. If for example a basin is formed from concrete wall structures, the walls have to withstand the lateral earth pressure, especially when the surface above or near the basis is confronted with additional and/or changing weights, e.g. from large constructions, vehicles, etc.. The concrete thus has to be thick enough to resist the lateral earth pressure as a result of the soil and on top thereof the additional/changing weights, or complex constructions or additional measures are required. The concrete walls to this end are often re-enforced with strength enhancing materials or objects. As an alternative a conventional spherical or cylindrical shaped metal tank can be used. Such a metal tank is also very heavy, large, expensive, and difficult to install and transport.

Accordingly, currently available suitable tanks are not only huge, but also very heavy. Installation of such a tank is therefore not beneficial and expensive due to the high cost of production and/or complexity of such a tank, and due to the high costs for transport and installation in the ground. Accordingly, the costs and thus return on investment are to high and long to be profitable for small industry and individual households.

The inventors came to the surprising insight that an improved subsurface tank would require a simplified construction, such that low costs and shortened return on investment would be feasible, such without compromising on the quality. The inventors propose to use a space frame construction, which is very suitable for building a very strong construction, which is lightweight and due to the modular construction is easy to build, which lowers the costs of installation, and moreover, can be transported in a very compact form, which thus lowers costs of transport.

Accordingly, a method of installing a subsurface tank is provided, wherein a framework is build up from a lightweight rigid structure modular space frame. The framework build has dimensions corresponding to the required volume of the tank. The framework is wrapped with a foil such that a tank is formed. Wrapping is to be understood in a broad sense. To obtain a tank according to all examples of the invention at least the bottom and wall surfaces have to be covered by the foil, in order to keep the fluid in the tank, and keep soil and soil contamination out. However, in a preferred example, the top of the tank is covered as well, hence, the entire exterior of the tank being wrapped.

The foil used, comprised of elastomeric material, is preferably comprised of synthetic rubber material such as an ethylene propylene diene monomer rubber, or an equivalent silicon based material which is suitable for long time placement in the ground, sufficiently thick or strong enough to resist to ground and dust penetrating the foil and thus entering the tank, and which preferably is watertight such that water in the tank does not leak through the foil.

Alternatively, the tank can be used as a retention or infiltration tank. Accordingly, the foil of the tank is in such an example arranged for water to penetrate the foil, for example due to a meshed structure of the foil, or by penetration of the foil.

The framework is a space frame or space structure, which is made from strong rigid lightweight structure constructed from interlocking struts in a geometric triangular pattern. The space frame is strong due to the inherent rigidity of the triangular shape. Preferably the form of the space frame is a horizontal slab of interlocking square pyramids and tetrahedral build from aluminium or tubular steel struts which are arranged to be submerged in water, or any other liquid used in the tank for storage of the energy.

Using a space frame has several advantages over known structures used for a forming a tank. Space frames are modular, hence, it is very easy to build any dimension of framework, corresponding to the required volume of the tank. Moreover, due to its modularity, the desired dimension can be determined on site, even during the build of the framework. Furthermore, due to the modularity and construction of interlocking joints or nodes, and the bars or rods or struts between the nodes, the space frame can be stored with minimal volume, which enables cheap transport from a factory or warehouse towards the installation site. This significantly lowers costs and thus return on investment. Moreover, space frames costs of joints and struts that are suitable for both low and high temperatures, without loosing strength at low or high temperature. This makes a tank build from a space frame suitable for low temperature water and for high temperature water, for example up to 90 degrees Celsius. More likely, the maximum temperature of the fluid in the tank will lie between 60 to 90 degrees Celsius, also defined as sensible heat, which in this form at these temperatures, can be used directly for heating purposes. This is in contrast to terrestrial heat, which is obtained at a temperature of about 12 degrees, and thus has to be compressed before it can be used for heating purposes.

Yet another advantage of using a space frame construction is that it increases the strength of the subsurface tank to such an extent that the site on top of the tank can still be used in a functional manner. Once the tank is covered, the site can be put back in use as a park, soccer field, garden meadow, lawn, or even (large, heavy) constructions can be build/placed on top of the tank. Accordingly, the tank according to the invention can be used in a plurality of applications and locations.

In an example, the method further comprising the steps of:
- digging a hole corresponding approximately at least the dimension of the framework.

The tank can be placed in a hole in the ground that was already present, for example at a construction site where soil is already excavated. On the other hand, prior to, or simultaneously with the manufacture of the tank by building up the framework, soil may be excavated, i.e. a hole may be dug which corresponds to the contents of the tank, or being approximately equal to the outer diameter and shape of the tank. When an excavator is present at the install site of the tank, it is advantageous to have the excavator dig the hole, i.e. excavate the soil, while in the meantime the framework is build from the modular space frame. Once the framework is ready and the soil excavated, the excavator can lower the framework in the dug hole and the tank can be closed. Contrary to installing a conventional tank or manufacturing a basin from a concrete floor and wall parts, materials required for installation are limited and installation time very short. For tanks sufficient for standard building/household heating/cooling requirements, the installation time can be reduced to one single day, which is beneficial from a return on investment point of view.

In an example, the method further comprising the steps of:
- stabilizing the framework by adding a layer of stabilization material in a remaining space between the hole and the framework, and wherein the material is preferably selected from the group comprising: sand, re-enforced sand, concrete, polyvinyl chloride, polyurethane foam.

To further simplify the installation, the dimensions of the hole could be slightly larger than the dimensions of outer dimensions of the framework. That way digging the hole does not need to be very accurate, as long as the hole is larger than the framework, the framework can be placed in the hole and the remaining gap between can be filled with stabilization material, which could simply be soil, or reinforced sand, concrete, polyvinyl chloride which also has a high thermal isolation, or polyurethane foam, which also has a high thermal isolation, and is strong enough to withstand sharp objects from damaging the foil.

In an example, the method further comprising the steps of:
- covering the framework by adding a layer of stabilization on top of the framework, and wherein the material is preferably selected from the group comprising: sand, re-enforced sand, concrete, polyvinyl chloride, polyurethane foam.

The top of the framework could also be covered with an additional layer, which further thermally isolates the tank and increases resistance to damages to the tank.

In an example, the method further comprises:
- providing a phase change material inside said subsurface tank.

The advantage of introducing phase change materials is that it further increases the efficiency of the tank when used for storing thermal energy. Accordingly, the material from which the tank is created, e.g. the foil and space frame is in such an example arranged for phase change materials. Different kinds of phase change material can be used, for example organic phase change materials such as Paraffin or fatty acids or inorganic based on salt hydrates present either directly in the tank, or preferably contained in separate units, such as sachets, balls etc., between which the water can freely move.

In an example, the step of building the framework comprises:
- building the framework from the modular space frame, the framework having outer dimensions corresponding to the required volume of the tank and wherein the entire volume of the framework is comprised of the modular space frame.

Subsurface tanks require a certain constructional strength for the framework, expressed by the pressure it can withstand per square meter. Depending on the amount of pressure the tank has to withstand, e.g. determined by the application and use of the ground surface above and near the tank, and and the composition of the soil, it could be sufficient to build the framework only from a bottom part, top part and wall parts and leave part of the interior space of the framework open. Accordingly, less space frame construction parts are needed, time to build is lowered as are costs and return on investment. As an alternative, the entire interior space or dimension of the tank could be build from a space frame construction. This way subsurface tanks can be formed, having simple but strong constructions, for any application and required volume, even up to and beyond 1.000.000 litters of water. Above and/or near which tanks the ground surface can still be used for any purpose, such as roads, buildings, etc.

In an example, the method further comprising the steps of:
- providing an inlet opening in said foil covered framework arranged for liquid to flow into said tank;
- providing an outlet opening in the foil covered framework arranged for liquid to flow out of said tank.

As indicated, the tank could be used in several ways. For example, as a closed, sealed tank including a heat exchanger, such that once the tank is filled with a liquid like water, the thermal communication takes place through the heat exchanger. Alternatively, the tank can be used as a closed loop system wherein water, or another suitable liquid, flows trough the tank and is connected via an inlet and outlet opening to a tubular system connected to a thermal energy collection system such as a solar collector, and a thermal energy consumption system such as a central heating system. Alternatively, the tank could be used in an open loop system wherein water can be introduced and drawn from the tank continuously. Alternatively, the tank could also be used as storage for liquids that have to be kept at a certain (low or moderate) temperature, such as a cow milk storage tank or a horticulture water tank. In yet another example, the tank could also be used as an infiltration tank or retention tank, when the foil covering the framework is meshed to let water exit the tank.

In an example, the step of building the framework comprises:
- building the framework from the modular space frame, the framework having wall surfaces tapered towards the bottom surface.

Preferably, the walls of the framework are tapered towards the bottom surface. The weight of the tank, especially when filled with water, realises a downward pressure. The lateral earth pressure from the soil pushing on the walls of the tank has a tendency of pushes the tank upward, due to its tapered walls. This upward pressure is cancelled-out by the downward pressure (weight) of the tank and liquid in the tank, by which the tank is thus kept in place. Preferably the walls are tapered such that the angle between bottom and walls is approximately 120 degrees and between top and walls approximately 60 degrees.

In an example, the step of building the framework comprises:
- building the framework from the modular space frame, the framework being any of an inverted pyramid shaped, inverted truncated pyramid shaped and inversed trapezoidal prism shaped.

As indicated, the walls are preferably tapered towards the bottom. In a further example, only two of the wall surfaces are tapered. As such, the tank has the form of a reversed or inverted trapezoidal prism. Alternatively, all four walls are tapered, by which the tank has the form of an inverted pyramid, which is preferably truncated.

In a second aspect, there is provided a subsurface tank, comprising a modular framework having dimensions corresponding to a required volume of the tank, and a foil wrapped around the framework comprised of elastomeric material, wherein the framework is comprised of a lightweight rigid structure modular space frame.

In an example, the lightweight rigid structure modular space frame is comprised of aluminium.

In an example, framework having outer dimensions corresponding to the required volume of the tank and wherein the entire volume of the framework is comprised of the modular space frame.

In an example, the framework having wall surfaces tapered towards the bottom surface.

In an example, the framework being any of an inverted pyramid shaped, inverted truncated pyramid shaped and inversed trapezoidal prism shaped.

In an example, the framework is comprising a space frame grid having a higher density towards the outer surfaces of the framework.

In a third aspect, there is provided use of a subsurface tank as a large capacity thermal energy storage tank, the subsurface tank being a subsurface tank according to any of the previous descriptions, installed according to a method of installing a subsurface tank according to any of the previous descriptions.

The above-mentioned and other features and advantages of the invention are illustrated in the following description with reference to the enclosed drawings which are provided by way of illustration only and which are not limitative to the present invention.

### Brief description of the Drawings

Fig. 1 shows in a flow chart, the steps of the method according to the invention.
Fig. 2 shows several stages of building a tank according to an example of the invention from modular space frame parts.
Fig. 3 shows a tank according to an example of the invention, installed as a subsurface tank for domestic non-industrial thermal heat/cold storage.

### Detailed Description

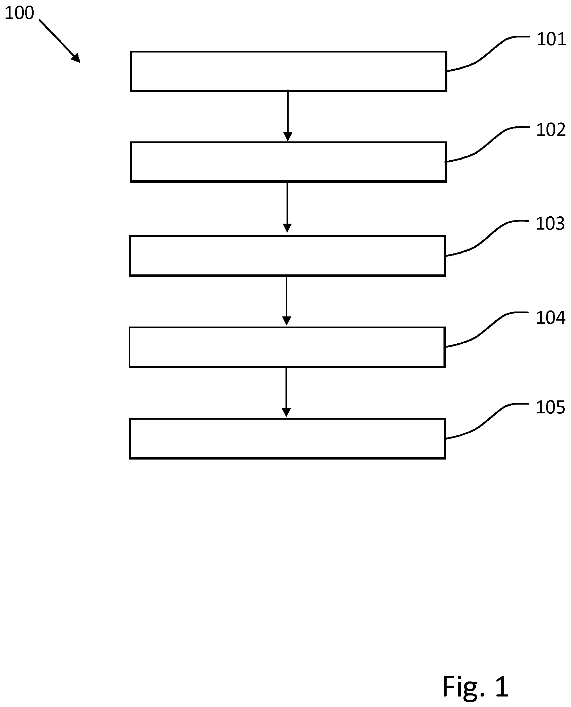

Fig. 1 shows the steps of the method 100 of installing a subsurface tank. In the first step 101, a framework is build, which framework has outer dimensions such that the interior of the tank corresponds to a required volume of the tank, for example 40, 60, 80, 100, 150, 200, 400, 500, or more cubic meters, basically, any volume is possible. The frame work is build as a modular frame work, in particular from rigid lightweight space frame parts such that a space frame construction is realised.

In the next step 102 a hole is being dug on the installation site, or a hole already dug in the ground at the installation site could also be used, or further excavated to the desired dimensions of the tank. In case of the hole being dug on the installation site, this step can take place prior, after, or simultaneous to step 101 of building the framework,

In the next step 103, a foil is provided which has dimensions sufficient to cover at least the walls and bottom surface of the framework, and preferably also the top surface.

In the next step 104 the foil is wrapped around the framework, such that a tank is obtained. In accordance with step 103, the wrapping is at least performed over the walls and bottom surface and preferably also over the top surface. The wrapping of the foil can be performed after the framework is placed in the hole, or prior to placing the framework in the hole.

In step 105 the framework is placed in the hole. As indicated above, prior to placing the framework in the hole, the framework can first be wrapped with foil, either only covering the walls and bottom surface of the framework, or the top surface as well. Alternatively, the foil can be placed in the hole and then the framework can be placed on top of the foil, after which the foil is wrapped around the framework.

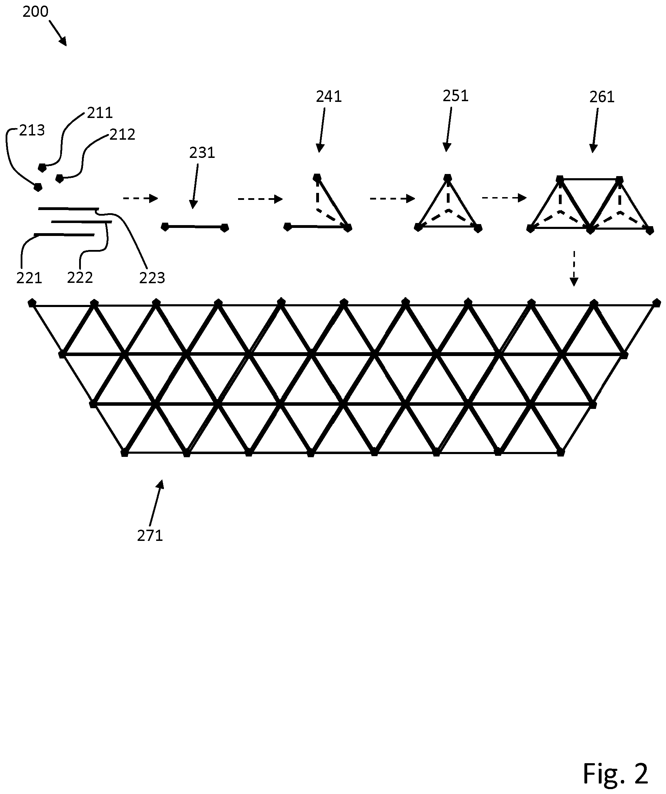

In Fig. 2 several steps 200 are shown from space frame components 211, 212, 213, 221, 222, 223, towards a fully build framework 271.

A space frame is a three-dimensional framework known for architectures and structural engineering above ground surface. A space frame is a lightweight (in comparison with for example conventional frameworks made from (solid) steel bars or concrete), rigid structure that is constructed from interlocking struts in a geometric pattern. Although space frame structures are known for spanning large areas such as roof covering etc. the inventors came to the insight that such a space frame structures is also very suitable to build a subsurface tank. A structure formed by a space frame has a low overall weight in comparison with a structure having the same capacity but constructed from conventional materials, for example cylindrical metal containers or subsurface storage formed by a concrete casting.

An advantage of the framework according to the invention is that the framework can be build on site, which simplifies transport, e.g. low transport volume and weight hence low transportation costs. For building the framework in its most simplified version only two types op components are required, i.e. bars 221, 222, 223 and their connection units 211, 212, 213. These connecting units are structural nodes arranged to connect bars in multiple directions. The invention is not limited to the type of nodes being used, e.g. being arranged to connect 3, 4, 5, 6, 7, 8, 9, 10, 11, 12 etc. bars in different direction, or in the way in which the bars can be connected to the node, for example by clamps, fasteners, screws, etc.

Preferably all bars have equal lengths, this gives the highest structural strength and simplifies construction of the framework. However, the invention is not limited thereto, and also bars of different lengths can be used, as well as bars of different strengths or material, e.g. thick heavier bars for example for the horizontal connections and thinner lighter bars as struts in between the heavier bars. Preferably all elements, 211-223 are made from stainless steel, but more preferably from aluminium, due to, amongst other, its strength (at all operating temperatures) and corrosion resistance and, alternatively materials having similar properties could be used as well.

The framework 271 consists, as indicated of several individual space frame elements 211-223. These elements, when combined, can form a space frame element, e.g. square pyramid or as shown in 251 a tetrahedron. The outer dimensions of such an individual space frame element 251 define the grid of the space frame. For example, when looking from a top view, two parallel bars can extend between the walls of the framework. These bars can thus have a length equal to the length or width of the framework, or can be formed from several shorter bars. The two parallel bars are interconnected by bars 221-223, for example forming a square in case of a square pyramid. The dimensions of that square define the space frame grid. Accordingly, in an example the horizontal bars of the framework are of longer length than the remaining bars of the framework, preferably, the horizontal bars of the framework have a length corresponding to the length or width of the tank.

Since the space frame construction is very strong, often stronger then required, the framework can also be build from space frame elements with different, less dense grids. For example, the outer layers can consist of denser grids, i.e. double density, when compared to the grid density in or near the centre of the framework. Preferably, one or more of the walls, bottom and top surface are thus formed from space frame elements in a double density grid. This could be achieved by connecting every node with a bar near any one or more of the walls, bottom and top surface, and skipping nodes for the remaining parts of the framework in or near the centre. A lower density can preferably be realized by skipping nodes, and using longer bars, for example to interconnect a horizontal bar of a first layer with a horizontal bar of the third layer, obviating the nodes and bars that interconnect the first and second horizontal bars and the second and third horizontal bars.

As indicated in Fig. 2, the start of the construction of the framework can for example take place simultaneously with excavating of the hole by an excavator. The construction starts with a plurality of space frame components 211-223. In the first step 231 a first part of a geometrical structure is formed by interconnecting two nodes with a bar. In the next step 241 further bars are connected to the node and other nodes are connected until a single space frame geometry 251 is formed, for example a square pyramid or as shown in 251 a tetrahedron. Once the first geometry is formed 251, the structure can be expanded with additional bars 221-223 and nodes 211-213. In the next step 261 several individual space frame geometries are interconnected, for example a plurality of tetrahedrons or tetrahedrons with interlocking square pyramids. This process is repeated until a structure, i.e. the framework 271 according to the invention, of the desired dimensions are obtained.

The framework shown in Fig. 2 consists entirely of space frame structures, e.g. tetrahedrons. This is however only an example, and provides a most rigid, strongest framework. The framework could however also consist of only walls, top and bottom elements formed by the space frame structures, which are interconnected to each other, hence, by which the centre of the framework remains open. Accordingly, the time to build the framework and the amount of components needed, and transported would also be lower, which lowers costs of installation, materials, and transport. This would have a positive effect on the return on investment.

The finished framework preferably has a shape as an inverted truncated pyramid or an inversed trapezoidal prism. Preferably the angle between the top surface and the wall surfaces is approximately 60 degrees. The advantage thereof is that the combined weight of the fluid and tank and the thus induced downward force, is translated through the tapered shaped of the framework to a horizontal force which neutralizes the force of the soil on the walls of the tank. In a more preferred example, the framework 271 can have a shape as indicated in Fig. 2, on top of which a similar shape is placed in opposite orientation. Thus for example as shown in Fig. 2, a framework build-up from three horizontal layers of several interconnecting tetrahedrons (and/or square pyramids), as well as an additional (single) layer on top thereof but tapered towards the top surface. Hence, a framework is obtained which is, by way of example, build from four horizontal layers of interconnecting tetrahedrons of which the top layer is tapered towards the top surface and the remaining three layers tapered towards the bottom surface. This way the combined weight of the fluid and tank are even further neutralized and a further advantage is, that the top surface area is decreased, which enables to use a larger tank for example under a conventional size construction area/building ground surface.

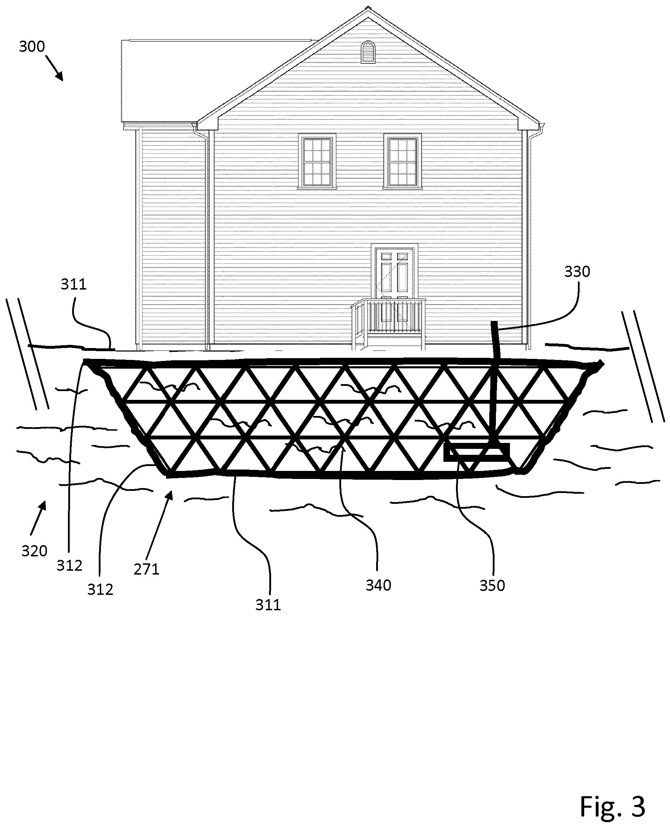

In Fig. 3 the end situation 300 of installation of the subsurface tank is shown. In this example a large construction is build on top of the subsurface tank, once installed and covered. Large and heavy constructions can be placed/build op top of the tank due to the strength of the tank as a result of the space frame construction thereof. The building shown in Fig. 3 is merely an example, other buildings or other use of the ground surface on top of the subsurface tank are also possible, such as parks, hockey/soccer fields, garden meadows, lawns, etc.

In Fig. 3 the subsurface tank 271 is embedded into the ground 320. The tank is not only covered with a foil but also an additional stabilisation layer 312 is provided on the wall surfaces/between the wall surfaces and the surrounding soil. Moreover, the bottom surface is also provided with a stabilisation layer 311. The stabilisation layer provides additional protection for objects that could penetrate the foil, e.g. rocks or roots of trees, and furthermore provides additional thermal isolation. Preferably the top surface is provided with such a layer as well. The material used to cover the top surface and used on the bottom surface is preferably polystyrene foam and the material used for the walls polyurethane foam. However other materials could also be used or combined.

Once the tank is formed it can be filled with a liquid, i.e. (tap) water, and optionally with a phase change material, for example contained in units along which the water can flow. 340. Once filled, the tank can be sealed in case of the tank being used as a closed thermal system, or can be connected to an inlet/outlet in case of an open thermal system wherein fresh water can be introduced and water can be drawn from the tank.

The example shown in Fig. 3 is a closed/sealed tank 271 in which water 340 remains in the tank. The tank is used as a thermal energy storage tank wherein the water temperature for example is raised during summer and the heat of the hot water can be used during winter to heat a building. The way in which the thermal energy is stored in the tank 271 and drawn from the tank is by use of a heat exchanging module 350. A primary side of the heat exchanging module 350 is in thermal connection with the water 340 in the tank 271, and a secondary side of the heat exchanging module 350 is in connection with a medium in a duct 330 that is for example connected to the hot water tap in the building, a central heating system in the building or other device or system that could use the heat (old cold) from the tank 271. Vice versa, the heat exchanging module 330 is arranged not only to draw thermal energy from, but also store thermal energy in the tank. For example, a solar panel (not shown) could be connected to the heat exchanging module 330 to heat the water, or an air-conditioning unit could be connected to capture waste heat of the air-conditioning unit and store the heat in the tank by heating the water in the thank through the heat exchanging module 330. These are only examples, and the invention is applicable for other applications as well, and the invention is accordingly not limited to the examples described, but determined by the appending claims.

Based on the above description, a skilled person can provide modifications and additions to the method and arrangement disclosed, which modifications and additions are all comprised by the scope of the appended claims.

## Claims

1. A method of installing (100) a subsurface tank (320), comprising the steps of:
- building (101) a framework (271) having dimensions corresponding to a required volume of the tank;
- providing a foil (103) having dimensions sufficient to cover the framework (271);
- covering (104) at least the bottom and wall surfaces of the framework (271) with said foil;
- placing (105) said framework (271) in a hole sufficient for said framework (271) to be contained below ground surface; **characterized in that** said step of building said framework (271) comprises building said framework (271) from a modular space frame (211-223), which is made from a lightweight rigid structure constructed from interlocking struts in a geometric triangular pattern.

2. The method of installing said subsurface tank according to claim 1, further comprising the steps of:
- digging (102) a hole corresponding approximately at least said dimension of said framework (271).

3. The method of installing said subsurface tank of according to any of the previous claims, further comprising the steps of:
- stabilizing said framework (271) by adding a layer of stabilization material in a remaining space between said hole and said framework (271), and wherein said material is preferably selected from the group comprising: sand, re-enforced sand, concrete, polyvinyl chloride, polyurethane foam.

4. The method of installing said subsurface tank of according to any of the previous claims, further comprising the steps of:
- covering said framework (271) by adding a layer of stabilization (312) on top of said framework (271), and wherein said material is preferably selected from the group comprising: sand, re-enforced sand, concrete, polyvinyl chloride, polyurethane foam.

5. The method of installing said subsurface tank of according to any of the previous claims, wherein said step of building said framework (271) comprises:
- building said framework (271) from said modular space frame, said framework (271) having outer dimensions corresponding to said required volume of said tank and wherein the entire volume of said framework (271) is comprised of said modular space frame.

6. The method of installing said subsurface tank of according to any of the previous claims, wherein said method further comprises:
- providing a phase change material (340) inside said subsurface tank.

7. The method of installing said subsurface tank of according to any of the previous claims, further comprising the steps of:
- providing an inlet opening in said foil covered framework (271) arranged for liquid to flow into said tank;
- providing an outlet opening in said foil covered framework (271) arranged for liquid to flow out of said tank.

8. The method of installing said subsurface tank of according to any of the previous claims, wherein said step of building said framework (271) comprises:
- building said framework (271) from said modular space frame, said framework (271) having wall surfaces tapered towards said bottom surface.

9. The method of installing said subsurface tank of according to any of the previous claims, wherein said step of building said framework (271) comprises:
- building said framework (271) from said modular space frame, said framework (271) being any of an inverted pyramid shaped, inverted truncated pyramid shaped and inversed trapezoidal prism shaped.

10. A subsurface tank, comprising a modular framework (271) having dimensions corresponding to a required volume of said tank, and a foil wrapped around said framework (271) comprised of elastomeric material, **characterized in that** said framework (271) is comprised of a modular space frame (211-223), which is made from a lightweight rigid structure constructed from interlocking struts in a geometric triangular pattern.

11. The subsurface tank according to claim 10, wherein said lightweight rigid structure modular space frame is comprised of aluminium.

12. The subsurface tank according to any of the previous claims 10-11, wherein said framework (271) having outer dimensions corresponding to said required volume of said tank and wherein the entire volume of said framework (271) is comprised of said modular space frame.

13. The subsurface tank according to any of the previous claims 10-12, wherein said framework (271) having wall surfaces tapered towards said bottom surface, and said framework (271) in particular being any of an inverted pyramid shaped, inverted truncated pyramid shaped and inversed trapezoidal prism (251) shaped.

14. The subsurface tank according to any of the previous claims 10-13, wherein said framework (271) is comprising a space frame grid having a higher density towards the outer surfaces of said framework.

15. Use of a subsurface tank as a large capacity thermal energy storage tank, said subsurface tank being a subsurface tank according to any of the previous claims 10-14 and obtainable by installing it by means of a method of installing a subsurface tank according to any of the previous claims 1-9.

## Patentansprüche

1. Verfahren zur Installation (100) eines unterirdischen Tanks (320), das die folgenden Schritte umfasst:
- Errichten (101) einer Rahmenkonstruktion (271) mit Abmessungen, die einem erforderlichen Volumen des Tanks entsprechen;
- Bereitstellen einer Folie (103) mit Abmessungen, die ausreichen, um die Rahmenkonstruktion (271) abzudecken;
- Abdecken (104) zumindest des Bodens und der Wandoberflächen der Rahmenkonstruktion (271) mit der Folie;
- Platzieren (105) der Rahmenkonstruktion (271) in einer Grube, die ausreichend dafür ist, dass die Rahmenkonstruktion (271) unter der Bodenoberfläche gefasst ist; **dadurch gekennzeichnet, dass** der Schritt des Errichtens der Rahmenkonstruktion (271) Errichten der Rahmenkonstruktion (271) aus einem modularen Raumfachwerk (211-223) umfasst, das aus einer leichtgewichtigen starren Struktur hergestellt ist, die aus ineinandergreifenden Streben in einem geometrisch dreieckigen Muster konstruiert ist.

2. Verfahren zur Installation des unterirdischen Tanks nach Anspruch 1, das ferner die folgenden Schritte umfasst:
- Graben (102) einer Grube entsprechend ungefähr zumindest der Abmessung der Rahmenkonstruktion (271).

3. Verfahren zur Installation des unterirdischen Tanks nach einem der vorhergehenden Ansprüche, das ferner die folgenden Schritte umfasst:
- Stabilisieren der Rahmenkonstruktion (271) durch Hinzufügen einer Schicht aus Stabilisierungsmaterial in einem verbleibenden Raum zwischen der Grube und der Rahmenkonstruktion (271), und wobei das Material vorzugsweise aus der Gruppe ausgewählt wird, die besteht aus: Sand, verstärktem Sand, Beton, Polyvinylchlorid, Polyurethanschaum.

4. Verfahren zur Installation des unterirdischen Tanks nach einem der vorhergehenden Ansprüche, das ferner die folgenden Schritte umfasst:
- Abdecken der Rahmenkonstruktion (271) durch Hinzufügen einer Stabilisierungsschicht (312) oben auf der Rahmenkonstruktion (271), und wobei das Material vorzugsweise aus der Gruppe ausgewählt wird, die besteht aus: Sand, verstärktem Sand, Beton, Polyvinylchlorid, Polyurethanschaum.

5. Verfahren zur Installation des unterirdischen Tanks nach einem der vorhergehenden Ansprüche, wobei der Schritt des Errichtens der Rahmenkonstruktion (271) Folgendes umfasst:
- Errichten der Rahmenkonstruktion (271) aus dem modularen Raumfachwerk, wobei die Rahmenkonstruktion (271) äußere Abmessungen aufweist, die dem erforderlichen Volumen des Tanks entsprechen, und wobei das gesamte Volumen der Rahmenkonstruktion (271) aus dem modularen Raumfachwerk besteht.

6. Verfahren zur Installation des unterirdischen Tanks nach einem der vorhergehenden Ansprüche, wobei das Verfahren ferner Folgendes umfasst:
- Bereitstellen eines Phasenwechselmaterials (340) im Inneren des unterirdischen Tanks.

7. Verfahren zur Installation des unterirdischen Tanks nach einem der vorhergehenden Ansprüche, das ferner die folgenden Schritte umfasst:
- Bereitstellen einer Einlassöffnung in der folienbedeckten Rahmenkonstruktion (271), dazu angeordnet, dass Flüssigkeit in den Tank fließt;
- Bereitstellen einer Auslassöffnung in der folienbedeckten Rahmenkonstruktion (271), dazu angeordnet, dass Flüssigkeit aus dem Tank fließt.

8. Verfahren zur Installation des unterirdischen Tanks nach einem der vorhergehenden Ansprüche, wobei der Schritt des Errichtens der Rahmenkonstruktion (271) Folgendes umfasst:
- Errichten der Rahmenkonstruktion (271) aus dem modularen Raumfachwerk, wobei die Rahmenkonstruktion (271) Wandoberflächen aufweist, die schräg auf die Bodenoberfläche zulaufen.

9. Verfahren zur Installation des unterirdischen Tanks nach einem der vorhergehenden Ansprüche, wobei der Schritt des Errichtens der Rahmenkonstruktion (271) Folgendes umfasst:
- Errichten der Rahmenkonstruktion (271) aus dem modularen Raumfachwerk, wobei die Rahmenkonstruktion (271) eines aus umgekehrt pyramidenförmig, umgekehrt pyramidenstumpfförmig und umgekehrt trapezprismenförmig ist.

10. Unterirdischer Tank, umfassend eine modulare Rahmenkonstruktion (271) mit Abmessungen entsprechend einem erforderlichen Volumen des Tanks, und eine um die Rahmenkonstruktion (271) geschlagene Folie, die aus einem elastomeren Material besteht,
**dadurch gekennzeichnet, dass**
die Rahmenkonstruktion (271) aus einem modularen Raumfachwerk (211-223) besteht, das aus einer leichtgewichtigen starren Struktur hergestellt ist, die aus ineinandergreifenden Streben in einem geometrisch dreieckigen Muster konstruiert ist.

11. Unterirdischer Tank nach Anspruch 10, wobei das modulare Raumfachwerk mit leichtgewichtiger starrer Struktur aus Aluminium besteht.

12. Unterirdischer Tank nach einem der vorhergehenden Ansprüche 10-11, wobei die Rahmenkonstruktion (271) äußere Abmessungen aufweist, die dem erforderlichen Volumen des Tanks entsprechen, und wobei das gesamte Volumen der Rahmenkonstruktion (271) aus dem modularen Raumfachwerk besteht.

13. Unterirdischer Tank nach einem der vorhergehenden Ansprüche 10-12, wobei die Rahmenkonstruktion (271) Wandoberflächen aufweist, die schräg auf die Bodenoberfläche zulaufen, und wobei die Rahmenkonstruktion (271) insbesondere eines aus umgekehrt pyramidenförmig, umgekehrt pyramidenstumpfförmig und umgekehrt trapezprismenförmig (251) ist.

14. Unterirdischer Tank nach einem der vorhergehenden Ansprüche 10-13, wobei die Rahmenkonstruktion (271) ein Raumfachwerkraster umfasst, das in Richtung der äußeren Oberflächen der Rahmenkonstruktion eine höhere Dichte aufweist.

15. Verwenden eines unterirdischen Tanks als Wärmeenergiespeichertank mit großer Kapazität, wobei der unterirdische Tank ein unterirdischer Tank nach einem der vorhergehenden Ansprüche 10-14 ist und erhaltbar ist durch Installation mittels eines Verfahrens zur Installation eines unterirdischen Tanks nach einem der vorhergehenden Ansprüche 1-9.

## Revendications

1. Procédé d'installation (100) d'un réservoir souterrain (320), comprenant les étapes consistant à :
- construire (101) une ossature (271) ayant des dimensions correspondant à un volume requis du réservoir ;
- fournir une feuille (103) ayant des dimensions suffisantes pour couvrir l'ossature (271) ;
- recouvrir (104) au moins les surfaces de fond et de paroi de l'ossature (271) avec ladite feuille ;
- placer (105) ladite ossature (271) dans un trou suffisant pour que ladite ossature (271) soit contenue sous la surface du sol ; **caractérisé en ce que** ladite étape de construction de ladite ossature (271) comprend la construction de ladite ossature (271) à partir d'un cadre d'espace modulaire (211-223), qui est constitué d'une structure rigide légère construite à partir d'entretoises de verrouillage selon un motif géométrique triangulaire.

2. Procédé d'installation dudit réservoir souterrain selon la revendication 1, comprenant en outre les étapes consistant à :
- creuser (102) un trou correspondant approximativement à au moins ladite dimension de ladite ossature (271).

3. Procédé d'installation dudit réservoir souterrain selon l'une des revendications précédentes, comprenant en outre les étapes consistant à :
- stabiliser ladite ossature (271) en ajoutant une couche de matériau de stabilisation dans un espace restant entre ledit trou et ladite ossature (271), et où ledit matériau est de préférence choisi dans le groupe comprenant : le sable, le sable renforcé, le béton, le chlorure de polyvinyle, une mousse de polyuréthane.

4. Procédé d'installation dudit réservoir souterrain selon l'une des revendications précédentes, comprenant en outre les étapes consistant à :
- recouvrir ladite ossature (271) en ajoutant une couche de stabilisation (312) au-dessus de ladite ossature (271), et où ledit matériau est de préférence choisi dans le groupe comprenant : le sable, le sable renforcé, le béton, le chlorure de polyvinyle, une mousse de polyuréthane.

5. Procédé d'installation dudit réservoir souterrain selon l'une des revendications précédentes, dans lequel ladite étape de construction de ladite ossature (271) comprend :
- la construction de ladite ossature (271) à partir dudit cadre d'espace modulaire, ladite ossature (271) ayant des dimensions extérieures correspondant audit volume requis dudit réservoir et où le volume entier de ladite ossature (271) est constitué dudit cadre d'espace modulaire.

6. Procédé d'installation dudit réservoir souterrain selon l'une des revendications précédentes, dans lequel ledit procédé comprend en outre :
- la fourniture d'un matériau à changement de phase (340) dans ledit réservoir souterrain.

7. Procédé d'installation dudit réservoir souterrain selon l'une des revendications précédentes, comprenant en outre les étapes consistant à :
- fournir une ouverture d'entrée dans ladite ossature recouverte de feuille (271) agencée pour assurer l'écoulement du liquide dans ledit réservoir ;
- fournir une ouverture de sortie dans ladite ossature recouverte de feuille (271) agencée pour assurer l'écoulement du liquide hors dudit réservoir.

8. Procédé d'installation dudit réservoir souterrain selon l'une des revendications précédentes, dans lequel ladite étape de construction de ladite ossature (271) comprend :
- la construction de ladite ossature (271) à partir dudit cadre d'espace modulaire, ladite ossature (271) ayant des surfaces de paroi effilées vers ladite surface de fond.

9. Procédé d'installation dudit réservoir souterrain selon l'une des revendications précédentes, dans lequel ladite étape de construction de ladite ossature (271) comprend :
- la construction de ladite ossature (271) à partir dudit cadre d'espace modulaire, ladite ossature (271) ayant l'une quelconque d'une forme de pyramide inversée, d'une forme de pyramide tronquée inversée et d'une forme de prisme trapézoïdal inversé.

10. Réservoir souterrain, comprenant une ossature modulaire (271) ayant des dimensions correspondant à un volume requis dudit réservoir, et une feuille enroulée autour de ladite ossature (271) constitué de matériau élastomère, **caractérisé en ce que** ladite ossature (271) est constituée d'un cadre d'espace modulaire (211-223), qui est constitué d'une structure rigide légère construite à partir d'entretoises de verrouillage selon un motif géométrique triangulaire.

11. Réservoir souterrain selon la revendication 10, dans lequel ledit cadre d'espace modulaire à structure rigide légère est composé d'aluminium.

12. Réservoir souterrain selon l'une des revendications 10 à 11 précédentes, dans lequel ladite ossature (271) a des dimensions extérieures correspondant audit volume requis dudit réservoir et dans lequel le volume entier de ladite ossature (271) est constitué dudit cadre d'espace modulaire.

13. Réservoir souterrain selon l'une des revendications 10 à 12 précédentes, dans lequel ladite ossature (271) a des surfaces de paroi effilées vers ladite surface de fond, et ladite ossature (271) ayant en particulier l'une quelconque d'une forme de pyramide inversée, d'une forme de pyramide tronquée inversée et d'une forme de prisme trapézoïdal inversé (251).

14. Réservoir souterrain selon l'une des revendications 10 à 13 précédentes, dans lequel ladite ossature (271) comprend une grille de cadre d'espace ayant une densité plus élevée vers les surfaces extérieures de ladite ossature.

15. Utilisation d'un réservoir souterrain en tant que réservoir de stockage d'énergie thermique de grande capacité, ledit réservoir souterrain étant un réservoir souterrain selon l'une des revendications 10 à 14 précédentes et pouvant être obtenu en l'installant au moyen d'un procédé d'installation d'un réservoir souterrain selon l'une des revendications précédentes 1 à 9.
